# EUROPÄISCHE PATENTSCHRIFT

(11) **EP 4 176 293 B1**
(45) Veröffentlichungstag und Bekanntmachung des Hinweises auf die Patenterteilung: **06.11.2024**
(21) Anmeldenummer: 21732858.2
(22) Anmeldetag: 09.06.2021
(51) Int. Cl.: G02B 27/42, H04N 23/45, H04N 23/741, G02B 6/00, G02B 5/18, G02B 5/32

(54) **SYSTEM ZUM ABBILDEN EINER SZENE**
SYSTEM FOR IMAGING A SCENE
SYSTÈME POUR LA CAPTURE D'UNE SCÈNE

(30) Priorität: 01.07.2020 DE 102020117278
(43) Veröffentlichungstag der Anmeldung: 10.05.2023
(73) Patentinhaber: Audi AG, 85045 Ingolstadt (DE)
(72) Erfinder: MOLL, Tobias, 85055 Ingolstadt (DE)
(74) Vertreter: Hofstetter, Schurack & Partner
(86) Internationale Anmeldenummer: PCT/EP2021/065545
(87) Internationale Veröffentlichungsnummer: WO 2022/002552

(56) Entgegenhaltungen:
- WO-A1-2018/031634
- WO-A1-2020/041620
- US-A1- 2008 043 114

## Beschreibung

Die Erfindung betrifft ein System zum Abbilden einer Szene, wobei das System aufweist: eine Aufnahmeeinheit, die dazu eingerichtet ist, zweidimensionale oder/und dreidimensionale Informationen der Szene zu erfassen, wobei die Informationen Lichtwellen von der Szene aufweisen; ein erstes diffraktives optisches Element, das dazu eingerichtet ist, die Lichtwellen von der Aufnahmeeinheit zu empfangen; einen optischen Wellenleiter, der dazu eingerichtet ist, die von dem ersten diffraktiven optischen Element empfangenen Lichtwellen weiterzuleiten, wobei das erste diffraktive optische Element ferner dazu eingerichtet ist, die Lichtwellen in den optischen Wellenleiter einzukoppeln; und ein zweites diffraktives optisches Element, das dazu eingerichtet ist, die von dem optischen Wellenleiter weitergeleiteten Lichtwellen aus den optischen Wellenleiter auszukoppeln.

Aus der Druckschrift US 9 753 141 B1 ist ein Sensorbasiertes Bildgebungssystem mit minimierter Verzögerungszeit zwischen Sensoraufnahmen bekannt.

Aus der Druckschrift WO 94/24527 ist ein Spektrograph mit mehreren holographischen optischen Transmissionsgittern bekannt, die einfallendes Licht so beugen, dass verschiedene Spektralkomponenten auf räumlich getrennte Bereiche eines opto-elektronischen Detektors treffen.

Aus der Druckschrift US 10 116 915 B2 ist ein System zur Erzeugung künstlicher bzw. erweiterter Realität mit voneinander unterschiedlichen Datenerfassungsvorrichtungen, die jeweils mehrere Sensoren aufweisen, bekannt. Diese Datenerfassungsvorrichtungen, beispielsweise holographische Kameras, sammeln Szeneninformationen aus ihren jeweiligen Sichtfeld (FOV).

Aus der WO 2020/041620 A1 ist wellenleiterbasierter Bildschirm bekannt, wobei ein Wellenleiter dazu ausgebildet ist, Licht von einem Eingangsbereich zu einem Ausgangsbereich zu leiten. In dem Eingangsbereich und in dem Ausgangsbereich ist jeweils ein diffraktives optisches Element aufweisen, wobei das diffraktive optische Element im Eingangsbereich das Licht in den Wellenleiter einkoppelt, und wobei das diffraktive optische Element im Ausgangsbereich das Licht aus dem Wellenleiter auskoppelt.

Aus der US 2008/0043114 A1 ist eine Bildanzeigevorrichtung bekannt, die eine Vielzahl an Sensorbereichen aufweist, wobei ein jeweiliger Sensorbereich einem zugehörigen Linsenbereich zugeordnet ist. Jeder der Sensorbereiche kann eine andere Belichtungszeit aufweisen. Die einzelnen Aufnahmen der einzelnen Sensorbereiche können dann interpoliert werden.

In einer holographischen Kamera oder kurz "HoloCam" wird durch ein optisches Element Licht in einen Lichtleiter eingekoppelt und mittels interner Totalreflexion bis zu einem weiteren auskoppelnden optischen Element weitergeleitet. Hinter dem auskoppelnden optischen Element ist ein geeigneter Bildsensor bereitgestellt.

Einen großen Einfluss auf die erreichbare Bildqualität spielt hierbei das sogenannte Sensorrauschen. Das Sensorrauschen steht stellvertretend für verschiedene Störungen, die den zeitlichen Verlauf eines Pixelwerts, zum Beispiel von Bild zu Bild, beeinflussen. Dieses sogenannte zeitliche Rauschen umfasst dabei Photonenrauschen, Dunkelstrom, Auslese- und Quantisierungsrauschen, örtliches Rauschen, sowie "Offset Noise" und "Gain Noise". Der heutige Trend zu immer kleineren Sensoren mit gleichzeitig steigender Auflösung sorgt dabei für immer kleinere und damit weniger sensitive Pixel und somit zu einer größeren Rauschanfälligkeit. Das Rauschverhalten des aufgenommenen Bildes ist jedoch nicht nur von der Größe und Empfindlichkeit der einzelnen Pixel abhängig.

Auch der Dynamikumfang ist ein wichtiges Aufnahmekriterium. Dieser ist bei Bildsensoren deutlich geringer als zum Beispiel beim menschlichen Auge. Der Effekt ist aus der Fotographie bekannt: schaut man aus einem Fenster, ist das Auge in der Lage den dunkleren Innenraum sowie die hellere Außenwelt zu sehen. Eine Kamera mit deutlich geringerem Dynamikumfang hat dagegen in der Regel nur die Möglichkeit eine Szene korrekt belichtet aufzunehmen: den dunkleren Innenraum, wobei das Fenster überbelichtet ist, oder die Außenwelt, wobei der Innenraum deutlich unterbelichtet ist. Während unterbelichtete Bereiche zu einem gewissen Teil nachträglich wieder aufgehellt werden können, sind Informationen aus überbelichteten Bereichen nicht mehr zurück zu gewinnen.

Aufnahmen mit erweitertem Dynamikumfang können bisher grundsätzlich auf die folgenden zwei Arten entstehen. Zum einen kann eine Aufnahme digital nachbearbeitet werden. In der Regel wird für den hellen Bereich korrekt belichtet, der dunkle Bereich wird nachträglich aufgehellt. So entsteht der Eindruck einer besseren Beleuchtung im Bild. Zum anderen können mehrere Einzelaufnahmen mit unterschiedlichen Einstellungen, zum Beispiel unterschiedlichen Belichtungszeiten, hintereinander aufgenommen werden. So entstehen mehrere Einzelaufnahmen, welche idealweise geeignete Einstellungen für die dunkelsten bis hin zu den hellsten Bildbereichen abdecken. Diese Einzelaufnahmen können dann zusammengesetzt werden, wobei aus jeder Aufnahme der korrekt belichtete Bildanteil verwendet wird. Beispielsweise werden bei einer kurzen Belichtungszeit helle Bereiche korrekt aufgenommen und übernommen. Bei einer langen Belichtungszeit hingegen werden dunkle Bildbereiche besser belichtet und übernommen.

Die der Erfindung zu Grunde liegende Aufgabe wird darin gesehen ein verbessertes System zum Abbilden einer Szene bereitzustellen, das einerseits ein Abbild von der Szene mit einem erweiterten Dynamikumfang ermöglicht und andererseits Störungen durch Sensorrauschen reduziert.

Diese Aufgabe wird gelöst durch ein System zum Abbilden einer Szene mit den Merkmalen des Patentanspruchs 1 und durch eine holographische Kamera mit den Merkmalen des Anspruchs 12. Vorteilhafte Ausgestaltungen mit zweckmäßigen Weiterbildungen sind in den abhängigen Patentansprüchen angegeben.

Vorgeschlagen wird also ein System zum Abbilden einer Szene, wobei das System aufweist: eine Aufnahmeeinheit, die dazu eingerichtet ist, zweidimensionale oder/und dreidimensionale Informationen der Szene zu erfassen, wobei die Informationen Lichtwellen von der Szene aufweisen; ein erstes diffraktives optisches Element, das dazu eingerichtet ist, die Lichtwellen von der Aufnahmeeinheit zu empfangen; einen optischen Wellenleiter, der dazu eingerichtet ist, die von dem ersten diffraktiven optischen Element empfangenen Lichtwellen weiterzuleiten, wobei das erste diffraktive optische Element ferner dazu eingerichtet ist, die Lichtwellen in den optischen Wellenleiter einzukoppeln; und ein zweites diffraktives optisches Element, das dazu eingerichtet ist, die von dem optischen Wellenleiter weitergeleiteten Lichtwellen aus den optischen Wellenleiter auszukoppeln. Dabei ist vorgesehen, dass das System ferner aufweist: einen ersten Bildsensor und wenigstens einen zweiten Bildsensor, die dazu eingerichtet sind, die ausgekoppelten Lichtwellen zu erfassen und daraus erste Bilddaten und zweite Bilddaten zu erzeugen, wobei der erste Bildsensor und der zweite Bildsensor in einem dem zweiten diffraktiven optischen Element zugeordneten Bereich angeordnet sind.

Anstatt eines erfassenden Bildsensors werden hierbei mindestens zwei Bildsensoren in dem Bereich des auskoppelnden diffraktiven optischen Elements bereitgestellt. Die Bildsensoren können somit aus identischem Blickwinkel, d.h. aus der gleichen Position, die Szene aufnehmen. Dies wiederum ermöglicht es, die durch die zwei Sensoren erzeugten Bilddaten miteinander zu kombinieren. Dadurch kann ein gemitteltes, rauschvermindertes Abbild der Szene erstellt werden.

Der dem zweiten diffraktiven optischen Element zugeordnete Bereich weist dabei eine Fläche auf, in die das zweite diffraktive optische Element die Lichtwellen auskoppelt, wobei der erste Bildsensor und der zweite Bildsensor innerhalb der Fläche angeordnet sind.

In diesem Zusammenhang kann die Größe des zweiten diffraktiven optischen Elements, die Größe der Fläche, d.h. die Größe des Auskopplungsbereiches (auch "eyebox" genannt) bestimmen. Mit anderen Worten, durch die Größe des auskoppelenden zweiten diffraktiven optischen Element kann die Größe der Fläche, in welcher Lichtwellen der Szene empfangen werden, so festgelegt werden, dass die zwei Bildsensoren darin anordenbar sind und die gleiche Szene aufnehmen können. Auch ist es möglich, die Größe des zweiten diffraktiven Elements derart zu wählen, dass weitere Bildsensoren innerhalb der Fläche integrierbar sind.

In einer Ausführungsform kann das erste diffraktive optische Element ein erstes holographisches optisches Element aufweisen und das zweite diffraktive optische Element ein zweites holographisches optisches Element aufweisen. Die Nutzung von holographischen optischen Elementen, die leichter und raumsparender als konventionelle optische Elemente sind, ermöglicht es die optische Anordnung des Systems weiter zu vereinfachen und Gewicht zu reduzieren.

Das erste holographische optische Element und das zweite holographische optische Element können Volumenhologramme aufweisen, die die Lichtwellen entsprechend ihrer Wellenlängen in den Wellenleiter einkoppeln bzw. auskoppeln. Die Volumenhologramme können hierbei als Transmissions- sowie als Reflexionsgitter eingesetzt werden. Somit lassen sich verschiedene Anordnungen der holographischen Elemente in dem Wellenleiter realisieren.

In diesem Kontext kann das zweite holographische optische Element weitere optische Funktionen zur Bildkorrektur aufweisen, um beispielsweise eine Verzeichnung des Abbildes der Szene zu reduzieren.

Das erste holographische optische Element und das zweite holographische optische Element kann photosensitives Material, vorzugsweise Photopolymer aufweisen. Ebenso möglich sind Materialen wie dichromatische Gelatine, Silberhalogenide, lichtbrechende Kristalle oder/und ähnliches.

Der Wellenleiter kann ein Prisma aufweisen. Aber auch eine Anordnung mit einem Wellenleiter der eine Lichtfaser aufweist ist möglich.

Der erste Bildsensor kann eine erste Empfindlichkeit oder/und eine erste Belichtungszeit aufweisen, und der zweite Bildsensor kann eine zweite, von dem ersten Bildsensor unterschiedliche Empfindlichkeit oder/und eine von dem ersten Bildsensor unterschiedliche zweite Belichtungszeit aufweisen. Durch die unterschiedlich empfindlichen Bildsensoren in Verbindung mit variierender Belichtungszeit sind Aufnahmen der Szene mit großen Helligkeitsunterschieden möglich. Der erste Bildsensor kann zum Beispiel helle Bildbereiche ohne Überlichtung erfassen, während der zweite Bildsensor dunkle Bildbereiche ohne Unterbelichtung erfassen kann. Die daraus erzeugten Bilddaten können kombiniert werden, was es ermöglicht die Szene mit einem verbesserten Dynamikumfang abzubilden.

Der erste Bildsensor und der zweite Bildsensor können ferner die den Lichtwellen zugeordneten Photonen in elektrische Signale umwandeln, um daraus die ersten Bilddaten und die zweiten Bilddaten zu erzeugen.

Der erste Bildsensor und der zweite Bildsensor können CMOS Sensoren oder/und CCD Sensoren aufweisen.

Hierbei kann das System ferner eine Verarbeitungseinheit aufweisen, die die von dem ersten Bildsensor und dem zweiten Bildsensor erzeugten Bilddaten verarbeitet und daraus ein Abbild der Szene erzeugt. Die Verarbeitungseinheit kann dabei zusätzlich Korrekturen vornehmen.

Die obige Aufgabe wird auch gelöst durch eine Holographische Kamera mit dem zuvor beschriebenen System zum Abbilden einer Szene.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: eine vereinfachte und schematische Prinzipdarstellung einer Ausführungsform eines Systems zum Abbilden einer Szene;
- Fig. 2: eine vereinfachte und schematische Prinzipdarstellung einer Ausführungsform des Systems;
- Fig. 3: eine vereinfachte und schematische Prinzipdarstellung einer Ausführungsform des Systems; und

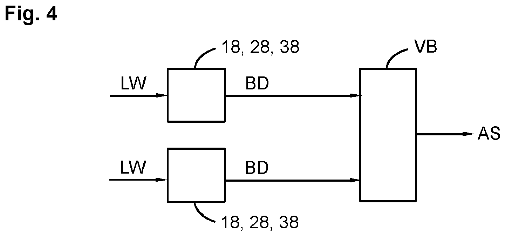

- Fig. 4: eine vereinfachte und schematische Prinzipdarstellung einer Ausführungsform von Bildsensoren in Zusammenwirken mit einer Verarbeitungseinheit des Systems.

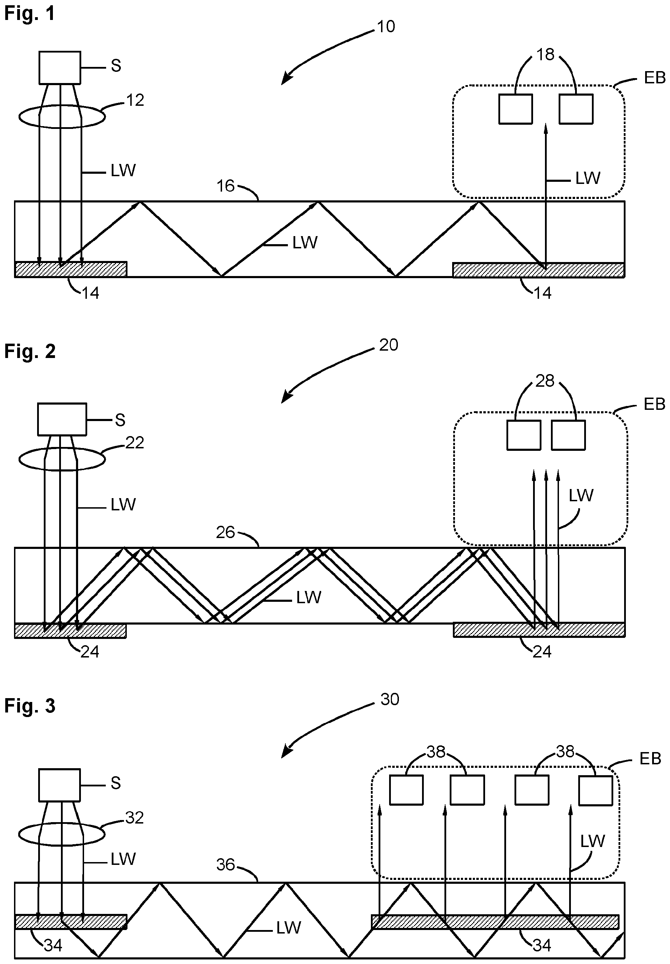

In Fig. 1 bis Fig. 3 sind vereinfachte und schematische Prinzipdarstellungen verschiedener Ausführungsformen eines Systems 10, 20, 30 zum Abbilden einer Szene S dargestellt. Bei der Szene S kann es sich um eine Umgebung des Systems 10, 20, 30 handeln. Das System 10, 20, 30 weist eine Aufnahmeeinheit 12, 22, 32, ein erstes diffraktives optisches Element 14, 24, 34 und ein zweites diffraktives optisches Element 14, 24, 34, einen Wellenleiter 16, 26, 36, sowie einen ersten Bildsensor 18, 28, 38 und wenigstens einen zweiten Bildsensor 18, 28, 38 auf.

Die Aufnahmeeinheit 12, 22, 32 erfasst zweidimensionale oder/und dreidimensionale Informationen der Szene S, wobei die Informationen Lichtwellen LW von der Szene S umfassen. Die Aufnahmeeinheit 12, 22, 32 kann, wie in Fig. 1 bis Fig. 3 illustriert, als ein Objektiv mit einer Linse ausgebildet sein, welches die Lichtwellen LW auf das erste diffraktive optische Element 14, 24, 34 abbildet. Dies ist jedoch nicht einschränkend. Die Aufnahmeeinheit 12, 22, 32 kann ebenso durch weitere optische Elemente, wie beispielsweise Spiegel, Blenden oder/und ähnliches ausgebildet werden.

Das erste diffraktive optische Element 14, 24, 34 empfängt die Lichtwellen LW von der Aufnahmeeinheit 12, 22, 32 und koppelt diese in den Wellenleiter 16, 26, 36 ein. Der Wellenleiter 16, 26, 36 leitet die von dem ersten diffraktiven optischen Element 14, 24, 34 empfangenen Lichtwellen LW durch Totalreflexion an das zweite diffraktive optische Element 14, 24, 34 weiter. Das zweite diffraktive optische Element 14, 24, 34 koppelt dann die durch den optischen Wellenleiter 16, 26, 36 weitergeleitet Lichtwellen LW aus den optischen Wellenleiter 16, 26, 36 aus. Dies ist durch die entsprechenden Pfeile in Fig. 1 bis Fig. 3 illustriert.

Dabei sind verschiedene Anordnungen des ersten und des zweiten diffraktiven optischen Elements 14, 24, 34 in dem System 10, 20, 30 möglich. Die diffraktiven optischen Elemente 14, 12, 24 können beispielsweise innerhalb des Wellenleiters 16, 36 angeordnet sein, was in Fig. 1 und Fig. 3 illustriert ist. Sie können aber auch außerhalb angeordnet werden, was in Fig. 2 dargestellt ist. Je nach Anforderung an das System 10, 20, 30 können hierbei beliebige Anordnungen realisiert werden.

Die ausgekoppelten Lichtwellen LW werden dann von dem ersten Bildsensor 18, 28, 38 und dem wenigstens einen zweiten Bildsensor 18, 28, 38 erfasst und daraus erste Bilddaten BD und zweite Bilddaten BD erzeugt. Dies wird unter Bezugnahme auf Fig. 5 später im Detail beschrieben. Der erste Bildsensor 18, 28, 38 und der wenigstens eine zweite Bildsensor 18, 28, 38 sind hierbei in einem dem zweiten diffraktiven optischen Element 14, 24, 34 zugeordneten Bereich EB angeordnet, welcher vereinfacht durch die gestichelte Umrandung in Fig. 1 bis Fig. 3 angedeutet ist.

Die Anordnung in dem Bereich EB ermöglicht es den Bildsensoren 18, 28, 38 die Lichtwellen LW von der Szene S aus der gleichen Perspektive zu erfassen. Somit können die erzeugten Bilddaten miteinander kombiniert bzw. gemittelt werden, um ein rauschvermindertes Abbild der Szene AS zu erhalten.

In einer Ausführungsform kann der dem zweiten diffraktiven optischen Element 14, 24, 34 zugeordnete Bereich EB eine Fläche aufweisen, in die das zweite diffraktive optische Element 14, 24, 34 die Lichtwellen LW auskoppelt, wobei der erste Bildsensor 18, 28, 38 und der wenigstens eine zweite Bildsensor 18, 28, 38 innerhalb der Fläche angeordnet sind.

Hierbei bestimmt die Größe des zweiten diffraktiven optischen Elements 14, 24, 34 die Größe der Fläche, d.h., die Größe des Auskopplungsbereiches auch "Eyebox" bezeichnet. Durch geeignete Wahl der Größe des zweiten diffraktiven optischen Elements 14, 24, 34 kann die Größe der Fläche so festgelegt werden, dass weitere Bildsensoren 18, 38, 38 innerhalb der Fläche angeordnet werden können, was zum Beispiel in der in Fig. 3 gezeigten Ausführungsform dargestellt ist. In Fig. 3 ist die Größe des zweiten diffraktiven Elements 34 so gewählt, dass insgesamt vier Bildsensoren in der Fläche angeordnet werden können. Dies ist jedoch nicht einschränkend. Es können verschiedene Größen für das zweite diffraktive optische Element 14, 24, 34 und somit eine beliebige Anzahl von Bildsensoren 18, 28, 38 realisiert werden. Durch Kombination der von den weiteren Bildsensoren erzeugten Bilddaten BD kann die Bildqualität des erzeugten Abbilds der Szene AS weiter verbessert werden.

Das erste diffraktive optische Element 14, 24, 34 kann ein erstes holographisches optisches Element aufweisen und das zweite diffraktive optische Element 14, 24, 34 kann ein zweites holographisches optisches Element aufweisen. Die holographischen optischen Elemente verfügen hierbei über Beugungsgitter, die durch holographische Verfahren hergestellt werden. Diese Beugungsgitter werden beispielsweise in Volumenhologramme geschrieben oder aufgezeichnet.

Das erste holographische optische Element und das zweite holographische optische Element können diese Volumenhologramme aufweisen, die die Lichtwellen LW entsprechend ihrer Wellenlängen in den Wellenleiter 16, 26, 36 einkoppeln bzw. auskoppeln. Genauer gesagt werden die Lichtwellen LW entsprechend der Bragg-Bedingung eingekoppelt bzw. ausgekoppelt, d.h. die Lichtwellen LW müssen die richtige Wellenlänge (Farbe) und die richtige Form (Strahlrichtung, Wellenfrontprofil) aufweisen. Hierbei wird zwischen Volumenhologrammen mit Reflexionsgittern sowie Volumenhologrammen mit Transmissionsgittern unterschieden. Bei Transmissionsgittern wird ein Teil der einfallenden Lichtwellen LW reflektiert und ein Teil absorbiert. Bei Reflexionsgittern werden die Lichtwellen LW für bestimmte Winkel und Wellenlängen so gebeugt, das konstruktive Interferenz entsteht. In Fig. 1 ist eine Ausführungsform mit Reflexionsgittern illustriert. Hierbei wird die Lichtwelle LW von der Szene S beim einkoppelnden ersten holographischen optischen Element reflektiert und durch Totalreflexion an das zweite holographische optische Element weitergeleitet, welches die Lichtwelle LW dann auskoppelt. In Fig. 1 handelt es sich um einen monochromatischen (einfarbigen) Aufbau, in welchem nur Lichtwellen LW mit einer bestimmten Wellenlänge reflektiert werden. Ein polychromatischer (mehrfarbiger) Aufbau ist ebenso möglich, dies ist in Fig. 2 dargestellt.

In Fig. 2 werden Lichtwellen LW mit unterschiedlichen Wellenlängen eingekoppelt bzw. ausgekoppelt. Dies kann durch Verwendung mehrerer holographischer optischer Elemente (nicht gezeigt) realisiert werden. Möglich ist auch die Verwendung von holographischen optischen Elementen mit Volumenhologrammen, in welche mehrere Beugungsgitter geschrieben werden.

In Fig. 3 ist eine Ausführungsform gezeigt, die einen monochromatischen Aufbau unter Verwendung von Transmissionsgittern illustriert. In diese Ausführungsform sind die holographischen optischen Elemente mittig im Wellenleiter 36 angeordnet. Hierbei wird ein Teil der einfallenden Lichtwelle LW absorbiert und ein Teil reflektiert.

Wie oben erwähnt sind die in Fig. 1 bis Fig. 3 dargestellten Beispiele nicht einschränkend. Weiter Anordnungen und Kombinationen sind möglich.

Das zweite holographische optische Element kann ferner weitere optische Funktionen zur Bildkorrektur aufweisen. Diese können beispielsweise in das Volumenhologramm geschrieben werden und bei Auskopplung der Lichtwellen LW zusätzliche Störungen, wie Verzerrungen, reduzieren.

Das erste holographische optische Element und das zweite holographische optische Element kann ein photosensitives Material, vorzugsweise Photopolymer aufweisen. Photopolymer weist eine gute Beugungseffizienz auf und hat den Vorteil, dass es nicht zusätzlich chemisch bearbeitet werden muss. Ebenso möglich sind Materialien wie dichromatisches Gelatine, Silberhalogenide, oder/und ähnliches.

Der Wellenleiter 16, 26, 36 kann ein Prisma aufweisen. Ebenso möglich ist eine Lichtleitfaser.

Der erste Bildsensor 18, 28, 38 kann eine erste Empfindlichkeit oder/und eine erste Belichtungszeit aufweisen, und der zweite Bildsensor 18, 28, 38 kann eine zweite, von dem ersten Bildsensor 18, 28, 38 unterschiedliche Empfindlichkeit oder/und eine von dem ersten Bildsensor unterschiedliche zweite Belichtungszeit aufweisen. Durch die unterschiedlichen Empfindlichkeiten oder/und Belichtungszeiten können unterschiedliche Regionen einer Szene S mit variierender Genauigkeit erfasst und kombiniert werden. Somit kann die Szene S mit allen Helligkeitsunterschieden abgebildet werden. Beispielsweise kann die Empfindlichkeit oder/und Belichtungszeit so eingestellt werden, dass der erste Bildsensor 18, 28, 38 helle Regionen der Szene S ohne Überbelichtung und der zweite Bildsensor 18, 28, 38 dunkle Regionen der Szene S ohne Unterbelichtung erfasst. Mittels Kombination der erzeugten Bilddaten BD, zum Beispiel einer Überlagerung von Bilddaten mit unterschiedlichen Belichtungszeiten kann ein Hochkontrastbild der Szene S erzeugt werden. Zum Beispiel kann mit der in Fig. 2 gezeigten polychromatischen Anordnung auch ein Farbbild mit erweitertem Dynamikumfang erzeugt werden.

Der erste Bildsensor 18, 28, 38 und der zweite Bildsensor 18, 28, 38 können die den Lichtwellen LW zugeordneten Photonen in elektrische Signale umwandeln, um daraus die ersten Bilddaten BD und die zweiten Bilddaten BD zu erzeugen. Dies geschieht durch den photoelektrischen Effekt, wobei vereinfacht dargestellt, Photonen von den Bildsensoren absorbiert und Elektronen bzw. Ladungen ausgelöst werden.

Hierbei kann der erste Bildsensor 18, 28, 38 und der zweite Bildsensor 18, 28, 38 ein CMOS Sensor oder/und ein CCD Sensor aufweisen. Bei CMOS Sensoren ("Complementary metal-oxide-semiconductor") werden Ladungen in einem Pixel in eine Spannung umgewandelt. Diese wird verstärkt, quantisiert und als digitaler Wert ausgegeben. CCD ("charged-coupled device") Sensoren bestehen aus einer Vielzahl von flächig angeordneten lichtempfindlichen Halbleiterelementen. Jedes Halbleiterelement stellt einen Fotodetektor dar, das die einfallenden Photonen in Elektronen umwandelt.

Das System 10, 20, 30 kann ferner eine Verarbeitungseinheit VB aufweisen, die die von den ersten Bildsensor 18, 28, 38 und den zweiten Bildsensor 18, 28, 38 erzeugten Bilddaten BD verarbeitet und daraus ein Abbild der Szene AS erzeugt. In diesem Kontext zeigt Fig. 5 eine vereinfachte und schematische Prinzipdarstellung einer Ausführungsform der Bildsensoren 18, 28, 38 im Zusammenwirken mit der Verarbeitungseinheit VB des Systems 10, 20, 30. Die durch den ersten und zweiten Bildsensor 18, 28, 38 empfangenen Lichtwellen LW werden wie oben beschrieben in Bilddaten BD umgewandelt und der Verarbeitungseinheit BV bereitgestellt. Diese verarbeitet die Bilddaten BD, wobei zusätzliche Bildkorrekturen durchgeführt werden können. Aus den verarbeiteten Bilddaten BD wird durch geeignete Kombination das Abbild der Szene AS erzeugt.

Ferner kann eine Holographische Kamera mit dem oben beschriebenen System 10, 20, 30 zum Abbilden einer Szene S ausgestattet sein.

## Patentansprüche

1. System (10, 20, 30) zum Abbilden einer Szene (S), wobei das System (10, 20, 30) aufweist:
eine Aufnahmeeinheit (12, 22, 32), die dazu eingerichtet ist, zweidimensionale oder/und dreidimensionale Informationen der Szene (S) zu erfassen, wobei die Informationen Lichtwellen (LW) von der Szene (S) aufweisen;
ein erstes diffraktives optisches Element (14, 24, 34), das dazu eingerichtet ist, die Lichtwellen (LW) von der Aufnahmeeinheit (12, 22, 32) zu empfangen;
einen optischen Wellenleiter (16, 26, 36), der dazu eingerichtet ist, die von dem ersten diffraktiven optischen Element (14, 24, 34) empfangenen Lichtwellen (LW) weiterzuleiten, wobei das erste diffraktive optische Element (14, 24, 34) ferner dazu eingerichtet ist, die Lichtwellen (LW) in den optischen Wellenleiter (16, 26, 36) einzukoppeln; und
ein zweites diffraktives optisches Element (14, 24, 34), das dazu eingerichtet ist, die von dem optischen Wellenleiter (16, 26, 36) weitergeleiteten Lichtwellen (LW) aus den optischen Wellenleiter (16, 26, 36) auszukoppeln, wobei das System (10, 20, 30) ferner aufweist:
einen ersten Bildsensor (18, 28, 38) und wenigstens einen zweiten Bildsensor, (18, 28, 38) die dazu eingerichtet sind, die ausgekoppelten Lichtwellen (LW) zu erfassen und daraus erste Bilddaten (BD) und zweite Bilddaten (BD) zu erzeugen, wobei der erste Bildsensor (18, 28, 38) und
der zweite Bildsensor (18, 28, 38) in einem dem zweiten diffraktiven optischen Element (14, 24, 34) zugeordneten Bereich (EB) angeordnet sind,
wobei der dem zweiten diffraktiven optischen Element (14, 24, 34) zugeordnete Bereich (EB) eine Fläche aufweist, in die das zweite diffraktive optische Element (14, 24, 34) die Lichtwellen (LW) auskoppelt, wobei der erste Bildsensor (18, 28, 38) und der wenigstens eine zweite Bildsensor (18, 28, 38) innerhalb der Fläche angeordnet sind.

2. System (10, 20, 30) nach Anspruch 1, **dadurch gekennzeichnet, dass** die Größe des zweiten diffraktiven optischen Elements (14, 24, 34), die Größe der Fläche bestimmt.

3. System (10, 20, 30) nach einem der vorangehenden Ansprüche, **dadurch gekennzeichnet, dass** das erste diffraktive optische Element (14, 24, 34) ein erstes holographisches optisches Element aufweist und dass das zweite diffraktive optische Element (14, 24, 34) ein zweites holographisches optisches Element aufweist.

4. System (10, 20, 30) nach Anspruch 3, **dadurch gekennzeichnet, dass** das erste holographische optische Element und das zweite holographische optische Element Volumenhologramme, VHGs, aufweisen, die die Lichtwellen (LW) entsprechend ihrer Wellenlängen in den Wellenleiter (16, 26, 36) einkoppeln bzw. auskoppeln.

5. System (10, 20, 30) nach Anspruch 3 oder 4, **dadurch gekennzeichnet, dass** das zweite holographische optische Element weitere optische Funktionen zur Bildkorrektur aufweist.

6. System (10, 20, 30) nach einem der Ansprüche 3 bis 5, **dadurch gekennzeichnet, dass** das erste holographische optische Element und das zweite holographische optische Element (14) ein photosensitives Material, insbesondere Photopolymer aufweisen.

7. System (10, 20, 30) nach einem der vorangehenden Ansprüche, **dadurch gekennzeichnet, dass** der Wellenleiter (16, 26, 36) ein Prisma aufweist.

8. System (10, 20, 30) nach einem der vorangehenden Ansprüche, **dadurch gekennzeichnet, dass** der erste Bildsensor (18) eine erste Empfindlichkeit oder/und eine erste Belichtungszeit aufweist, und dass der zweite Bildsensor (18) eine zweite, von dem ersten Bildsensor (18) unterschiedliche Empfindlichkeit oder/und eine von dem ersten Bildsensor (18) unterschiedliche zweite Belichtungszeit aufweist.

9. System (10, 20, 30) nach einem der vorangehenden Ansprüche, **dadurch gekennzeichnet, dass** der erste Bildsensor (18, 28, 38) und der zweite Bildsensor (18, 28, 38) die den Lichtwellen (LW) zugeordneten Photonen in elektrische Signale umwandelt, um daraus die ersten Bilddaten (BD) und die zweiten Bilddaten (BD) zu erzeugen.

10. System (10, 20, 30) nach Anspruch 9, **dadurch gekennzeichnet, dass** der erste Bildsensor (18, 28, 38) und der zweite Bildsensor (18, 28, 38) einen CMOS Sensor oder/und einen CCD Sensor aufweist.

11. System (10, 20, 30) nach einem der vorangehenden Ansprüche, **dadurch gekennzeichnet, dass** es ferner eine Verarbeitungseinheit (VB) aufweist, die die von dem ersten Bildsensor (18) und dem zweiten Bildsensor (18) erzeugten Bilddaten (BD) verarbeitet und daraus ein Abbild der Szene (AS) erzeugt.

12. Holographische Kamera mit einem System (10, 20, 30) zum Abbilden einer Szene (S) nach den Ansprüchen 1 bis 11.

## Claims

1. A system (10, 20, 30) for imaging a scene (S), wherein the system (10, 20, 30) comprises:
a capturing unit (12, 22, 32), which is configured to detect two-dimensional and/or three-dimensional information of the scene (S), wherein the information comprises light waves (LW) from the scene (S);
a first diffractive optical element (14, 24, 34), which is configured to receive the light waves (LW) from the capturing unit (12, 22, 32);
an optical waveguide (16, 26, 36), which is configured to pass the light waves (LW) received by the first diffractive optical element (14, 24, 34),
wherein the first diffractive optical element (14, 24, 34) is further configured to couple the light waves (LW) into the optical waveguide (16, 26, 36); and
a second diffractive optical element (14, 24, 34), which is configured to couple the light waves (LW) passed by the optical waveguide (16, 26, 36) out of the optical waveguide (16, 26, 36), wherein the system (10, 20, 30) further comprises:
a first image sensor (18, 28, 38) and at least one second image sensor (18, 28, 38), which are configured to detect the coupled-out light waves (LW) and to generate first image data (BD) and second image data (BD) therefrom, wherein the first image sensor (18, 28, 38) and the second image sensor (18, 28, 38) are arranged in an area (EB) associated with the second diffractive optical element (14, 24, 34),
wherein the area (EB) associated with the second diffractive optical element (14, 24, 34) comprises a surface, into which the second diffractive optical element (14, 24, 34) couples out the light waves (LW), wherein the first image sensor (18, 28, 38) and the at least one second image sensor (18, 28, 38) are arranged within the surface.

2. The system (10, 20, 30) according to claim 1, **characterized in that** the size of the second diffractive optical element (14, 24, 34) determines the size of the surface.

3. The system (10, 20, 30) according to any one of the preceding claims, **characterized in that** the first diffractive optical element (14, 24, 34) comprises a first holographic optical element and that the second diffractive optical element (14, 24, 34) comprises a second holographic optical element.

4. The system (10, 20, 30) according to claim 3, **characterized in that** the first holographic optical element and the second holographic optical element comprise volume holograms, VHGs, which couple the light waves (LW) into and out of the waveguide (16, 26, 36), respectively, corresponding to their wavelengths.

5. The system (10, 20, 30) according to claim 3 or 4, **characterized in that** the second holographic optical element comprises further optical functions for image correction.

6. The system (10, 20, 30) according to any one of claims 3 to 5, **characterized in that** the first holographic optical element and the second holographic optical element (14) comprise a photosensitive material, in particular photopolymer.

7. The system (10, 20, 30) according to any one of the preceding claims, **characterized in that** the waveguide (16, 26, 36) comprises a prism.

8. The system (10, 20, 30) according to any one of the preceding claims, **characterized in that** the first image sensor (18) has a first sensitivity and/or a first exposure time, and that the second image sensor (18) has a second sensitivity different from the first image sensor (18) and/or a second exposure time different from the first image sensor (18).

9. The system (10, 20, 30) according to any one of the preceding claims, **characterized in that** the first image sensor (18, 28, 38) and the second image sensor (18, 28, 38) convert the photons associated with the light waves (LW) into electrical signals to generate the first image data (BD) and the second image data (BD) therefrom.

10. The system (10, 20, 30) according to claim 9, **characterized in that** the first image sensor (18, 28, 38) and the second image sensor (18, 28, 38) comprise a CMOS sensor and/or a CCD sensor.

11. The system (10, 20, 30) according to any one of the preceding claims, **characterized in that** it further comprises a processing unit (VB), which processes the image data (BD) generated by the first image sensor (18) and the second image sensor (18) and generates a picture of the scene (AS) therefrom.

12. A holographic camera with a system (10, 20, 30) for imaging a scene (S) according to claims 1 to 11.

## Revendications

1. Système (10, 20, 30) destiné à former une image d'une scène (S), dans lequel le système (10, 20, 30) comporte :
une unité d'enregistrement (12, 22, 32) configurée pour capturer des informations bidimensionnelles et/ou tridimensionnelles de la scène (S), les informations comportant des ondes lumineuses (LW) provenant de la scène (S) ;
un premier élément optique diffringent (14, 24, 34) configuré pour recevoir les ondes lumineuses (LW) de l'unité d'enregistrement (12, 22, 32) ;
un guide d'ondes optique (16, 26, 36) configuré pour transférer les ondes lumineuses (LW) reçues du premier élément optique diffringent (14, 24, 34), le premier élément optique diffringent (14, 24, 34) étant en outre configuré pour coupler les ondes lumineuses (LW) dans le guide d'ondes optique (16, 26, 36) ; et
un second élément optique diffringent (14, 24, 34) configuré pour coupler les ondes lumineuses (LW) transférées par le guide d'ondes optique (16, 26, 36) depuis l'extérieur du guide d'ondes optique (16, 26, 36), le système (10, 20, 30) comportant en outre :
un premier capteur d'image (18, 28, 38) et au moins un second capteur d'image (18, 28, 38) configurés pour capturer les ondes lumineuses (LW) couplées à l'extérieur et pour générer des premières données d'image (BD) et des secondes données d'image (BD) à partir de celles-ci, le premier capteur d'image (18, 28, 38) et le second capteur d'image (18, 28, 38) étant agencés dans une zone (EB) associée au second élément optique diffringent (14, 24, 34),
la région (EB) associée au second élément optique diffringent (14, 24, 34) comportant une surface dans laquelle le second élément optique diffringent (14, 24, 34) couple les ondes lumineuses (LW) à l'extérieur, le premier capteur d'image (18, 28, 38) et le au moins un second capteur d'image (18, 28, 38) étant agencés à l'intérieur de la surface.

2. Système (10, 20, 30) selon la revendication 1, **caractérisé en ce que** la taille du second élément optique diffringent (14, 24, 34) détermine la taille de la surface.

3. Système (10, 20, 30) selon l'une des revendications précédentes, **caractérisé en ce que** le premier élément optique diffringent (14, 24, 34) comporte un premier élément optique holographique et **en ce que** le second élément optique diffringent (14, 24, 34) comporte un second élément optique holographique.

4. Système (10, 20, 30) selon la revendication 3, **caractérisé en ce que** le premier élément optique holographique et le second élément optique holographique comportent des hologrammes volumiques, VHG, qui couplent les ondes lumineuses (LW) en fonction de leurs longueurs d'onde dans le guide d'ondes (16, 26, 36) ou à l'extérieur de celui-ci.

5. Système (10, 20, 30) selon la revendication 3 ou 4, **caractérisé en ce que** le second élément optique holographique a en outre des fonctions optiques supplémentaires pour la correction d'image.

6. Système (10, 20, 30) selon l'une des revendications 3 à 5, **caractérisé en ce que** le premier élément optique holographique et le second élément optique holographique (14) comportent un matériau photosensible, en particulier un photopolymère.

7. Système (10, 20, 30) selon l'une des revendications précédentes, **caractérisé en ce que** le guide d'ondes (16, 26, 36) comporte un prisme.

8. Système (10, 20, 30) selon l'une des revendications précédentes, **caractérisé en ce que** le premier capteur d'image (18) a une première sensibilité et/ ou un premier temps d'exposition, et **en ce que** le second capteur d'image (18) a une seconde sensibilité différente du premier capteur d'image (18) et/ou un second temps d'exposition différent du premier capteur d'image (18).

9. Système (10, 20, 30) selon l'une des revendications précédentes, **caractérisé en ce que** le premier capteur d'image (18, 28, 38) et le second capteur d'image (18, 28, 38) convertissent les photons associés aux ondes lumineuses (LW) en signaux électriques afin de générer les premières données d'image (BD) et les secondes données d'image (BD) à partir de ceux-ci.

10. Système (10, 20, 30) selon la revendication 9, **caractérisé en ce que** le premier capteur d'image (18, 28, 38) et le second capteur d'image (18, 28, 38) comportent un capteur CMOS et/ou un capteur CCD.

11. Système (10, 20, 30) selon l'une des revendications précédentes, **caractérisé en ce qu'**il comporte en outre une unité de traitement (VB) qui traite les données d'image (BD) générées par le premier capteur d'image (18) et le second capteur d'image (18) et génère une image de la scène (AS) à partir de celles-ci.

12. Caméra holographique ayant un système (10, 20, 30) pour former une image d'une scène (S) selon les revendications 1 à 11.
